# EUROPEAN PATENT APPLICATION

(11) **EP 2 527 896 A1**
(43) Date of publication of application: **28.11.2012**
(21) Application number: 11290243.2
(22) Date of filing: 25.05.2011
(51) Int. Cl.: G02B 6/44, G02B 6/46

(54) **Laying set for laying an optical transmission line and corresponding network system with optical transmission line**

(71) Applicant: Alcatel Lucent, 75007 Paris (FR)
(72) Inventor: Krahn, Oliver, 91056 Erlangen (DE); Biermann, Jürgen, 91056 Erlangen (DE)
(74) Representative: Michalski Hüttermann & Partner

(57) **Abstract**

The present invention relates to a laying set (10) for laying an optical transmission line (12). According to the invention the set (10) comprises:
- at least one optical fiber (14) for optically transmitting digital data; and
- a flexible carrier device (16);
wherein a first side region (18) of the optical fiber (14) is affixed to a first side (20) of the carrier device (16) and wherein a second side region (22) of the optical fiber (14) opposite to the first side region (18) and/or a second side (26) of the carrier device (16) opposite to the first side (20) comprises an adhesive (24) for fixing the optical transmission line (12) to at least one substrate medium when the optical transmission line (12) is laid.

The present invention further relates to a corresponding network system (28).

## Description

The present invention relates to a laying set for laying an optical transmission line and corresponding network system with optical transmission line.

### BACKGROUND ART

Changeover to optical fibers in telecommunication networks does progress constantly. One of the current focuses is to introduce optical fiber on long haul transmission links and core networks of national telecommunication infrastructure. As part of the discussion to further extend, the reach of optical networks into the lower levels of the network architectures is an important issue. As part of the discussion about FTTx (FTTx: Fiber to the x is a generic term for any broadband network architecture that uses optical fiber to replace all or part of the usual metal local loop used for last mile telecommunications), the cost to connect and distribute broadband signals in individual private home units becomes decisive on the overall business case. While at the moment some groups consider rolling fiber to the curb, the last mile or yards still remain traditional copper wires as in many cases it is very intrusive to replace the existent installations in the homes. The level of acceptance of the new technology is low and the cost of installation rather high within the home units, as long as the optical cables required and the methods and procedures for installation are at a similar state as state of the art power or data cables today.

### SUMMARY

There is a strong demand for an optical transmission line easy to lay/install, especially by private individuals.

According to some embodiments of the invention, the laying set (or installation set) comprises (i) at least one optical fiber for optically transmitting digital data and (ii) a flexible carrier device. A first side region of the optical fiber is affixed to a first side of the carrier device. A second side region of the optical fiber opposite to the first side region and/or a second side of the carrier device opposite to the first side comprises an adhesive for fixing the optical transmission line to at least one substrate medium when laying/routing the optical transmission line. This solution allows reliable distribution of broadband services within buildings at low cost. The substrate medium can be at least one of a wall, a floor, a piece of furniture like for example a wardrobe, a baseboard, a door case, etc.

The main advantages of this laying set (or installation set) are (a) a reduced installation effort and (b) a low optical impact of the installed cable or disturbance during the installation/laying.

Therefore, the idea is to provide an optical fiber with a carrier device. In a first preferred embodiment, this arrangement of optical fiber and carrier device is the optical transmission line. The connection between the optical fiber and the substrate gives a certain stability to the fiber run of the laid/installed optical transmission line. In a second preferred embodiment, the carrier device could be removed once the fiber is installed. In this second embodiment, the optical fiber forms the optical transmission line. In both ways, the fiber can be pulled across aisles, floors, ceilings, walls or even furniture and desks with minimal optical impact and effort. The carrier device preferably is a tape or a foam string.

Preferably, the first side region of the optical fiber is detachably affixed to the first side of the carrier device. According to a preferred embodiment of the present invention, the fixation of the optical fiber to the first side of the carrier device is performed by an adhesion.

According to another preferred embodiment of the present invention, the optical fiber is partial embedded in the carrier device. In addition to material closure (adhesive bound) and/or traction, the optical fiber is affixed to the carrier device by a form fit.

According to yet another preferred embodiment of the present invention, the carrier device or at least one of the sides of the carrier device is arranged or prepared for optically adapting the optical transmission line to the substrate medium. In this case, the carrier device will be part of the laid/installed optical transmission line.

In case the carrier device is left attached, it might be used to protect the fiber in case it docs not disturb. Different colors or forms of the carrier device can be planned for to allow best camouflage in different environments.

Preferably, the carrier device is a transparent carrier device. In this embodiment, the carrier device is optically adapted to the substrate medium.

According to another preferred embodiment of the present invention, the surface at the first side and/or second side of the carrier device can be painted.

Preferably, the laying set is configured as piece goods. E.g., the arrangement of the optical fiber and the carrier device is wound into a roll. As an alternative, the laying set is configured as a laying set with a pre-assembled or assembled optical transmission line.

Preferably, the laying set comprises only one optical Fiber per carrier device. An optical transmission line with only one optical fiber is very flexible and therefore easy to install/lay.

According to another preferred embodiment of the present invention, the adhesive on the second side region of the optical fiber at least partial extends over the first side of the carrier device.

According to other embodiments of the invention, the aforementioned optical transmission line is used for connecting customer premises equipment and/or at least one router device with a data and/or telecommunication socket of a building. In one preferred embodiment, the building is a single-family house and/or the part of a building is an apartment of an apartment block. In another preferred embodiment, the part of the building is an office environment.

The installation process is straightforward. The optical fiber of the optical transmission line is connected to a transfer point like the data and/or telecommunication socket and pulled as a single piece to the next node. This might be the actual modem providing Wireless or fixed RJ45 LAN connectivity, an optical amplifier or any other customer premises equipment (CPE). The "invisible" optical transmission line can be used to implement the entire connection or only parts of it combined with any other technology.

To allow easy self-installation, a special connection type is required. On site end user termination must be designed to support "plug and play functions" without additional tools required. The multi-port as well single service termination block (snap in; snap out feature) is designed to support a click, plug and play connection with protection, per micro fiber connection, against moisture, UV and mechanical influences. The fiber is connected to the devices with a simple connector similar to a crimp connections that will position and fix the fiber. The installation that way is easy and can be performed by anyone without specific skills or expertise. This will reduce the cost of deployment in the home network environment. To allow improved detection of fiber failures there could be specific indicators close to the connectors or in-band signaling showing the link status in a Browser. A new optical transmission line would just replace a broken one.

According to further embodiments of the invention, a network system comprises (i) a data and/or telecommunication socket of a building or part of a building; (ii) customer premises equipment (CPE) and/or router devices; and (iii) at least one aforementioned optical transmission line connecting the customer premises equipment and/or the router device with the data and/or telecommunication socket of the building. Preferably, the building is a single-family house and/or the part of a building is an apartment of an apartment block. A network system like this is a home network system. In another preferred embodiment, the part of the building is an office environment.

These and other aspects of the invention will be apparent from and elucidated with reference to the embodiments described hereinafter.

### BRIEF DESCRIPTION OF THE DRAWINGS

Fig. 1 is an exemplary schematic representation of a section of a laying set according to a preferred embodiment of the invention; and
Fig. 2 is an exemplary schematic representation of a corresponding network system with at least one optical transmission line laid by means of the laying set.

### DETAILED DESCRIPTION

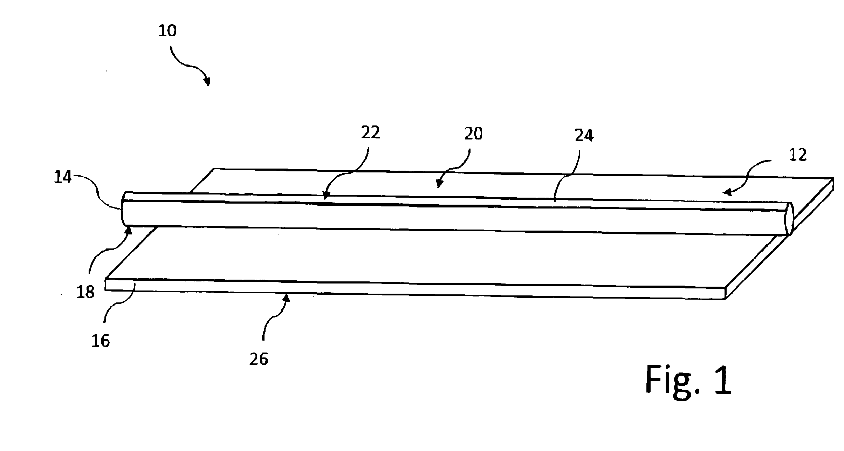

Fig. 1 shows an exemplary schematic representation of a section of a laying set (installation set) 10 for establishing a broadband optical transmission line 12. The laying set 10 comprises an optical fiber 14 for optically transmitting digital data and a flexible layered supporting carrier device 16. The cross section of the fiber 14 is substantially circular and the diameter of the fiber 14 is only a few microns. On the other hand, the width of the carrier device 16 is a few millimeters or more than a few millimeters, preferably more than five millimeters (> 5 mm). A first side region 18 of the optical fiber 14 is detachably affixed to a first side 20 of the carrier device 16. A second side region 22 of the optical fiber 14 opposite to the first side region 18 comprises an adhesive 24 for fixing the optical transmission line 12 to a substrate medium when laying the optical transmission line 12. The carrier device 16 of this embodiment is a tape or a foam string.

An adhesion by means of a second adhesive performs the detachable fixation of the optical fiber 14 to the first side 20 of the carrier device 16. Therefore, the second adhesive (not shown) is located between the first side region 18 of the optical fiber 14 and a corresponding region on the first side 20 of the carrier device 16. The second adhesive has a lower adhesive force than the (first) adhesive 24.

The carrier device 16 is a transparent carrier device, especially a transparent tape. Because of its transparency, this carrier device 16 is optically adapted to any possible substrate medium. Additionally, the surface at the first side 20 and/or the second side 26 opposite to the first side 20 of the carrier device 16 is paintable with paint and/or varnish.

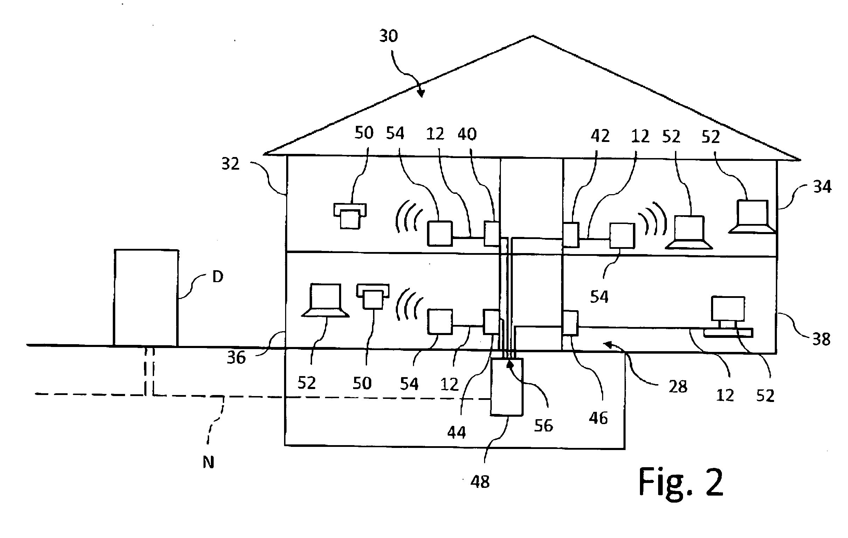

Fig. 2 shows an exemplary schematic representation of a corresponding broadband network system 28 installed/laid in a building 30. The building 30 shown in Fig. 2 is an apartment block with four apartments 32, 34, 36, 38. Each apartment 32, 34. 36, 38 is equipped with an individual data and/or telecommunication socket 40, 42, 44, 46 (like a telephone socket) connected to a main data and/or telecommunication socket 48 of the building 30. This main data and/or telecommunication socket 48 is connected to a global network system N outside the building 30 comprising a distribution station D. In this embodiment, the main data and/or telecommunication socket 48 is located in the cellar of the building 30.

The network system 28 comprises at least one optical transmission line 12 laid by means of the aforementioned laying set 10. The network system 28 further comprises a data and/or telecommunication socket 40, 42, 44, 46, 48 of the building 28 or part of the building 28 and customer premises equipment 50. 52 (computer, telecommunication devices like telephone or fax machine) and/or router devices 54 like for example a DSL-router or W-LAN-router device within the apartments 32, 34, 36, 38. The at least one optical transmission line 12 is laid by means of a laying set 10 and connects the customer premises equipment 50, 52 and/or the router device 54 with the data and/or telecommunication socket 40, 42, 44, 46 of the corresponding apartment 32, 34, 36. 38. The substrate medium within this building 30 can be at least one of a wall, a floor, a piece of furniture like for example a wardrobe, a baseboard, a door case, etc.

Conventional optical data cables 56, conventional electrical data cables or the simple optical transmission lines 12 can establish the connection between the main data and/or telecommunication socket 48 and the individual data and/or telecommunication sockets 40, 42, 44, 46 of the apartments 32, 34, 36, 38.

In a first apartment 32 of the building 30, an optical transmission line 12 establishes a data link between the corresponding data and/or telecommunication socket 40 and a WLAN router device 54. The router device 54 is connected to a cordless telephone 50 by an air interface. In a second apartment 34 of the building 30, an optical transmission line 12 establishes a data link between the corresponding data and/or telecommunication socket 42 and a WLAN router device 54. Said router device 54 is connected to laptop computers 52 by an air interface, In a third apartment 36 of the building 30, an optical transmission line 12 establishes a data link between the corresponding data and/or telecommunication socket 44 and a WLAN router device 54. This router device 54 is connected to a telephone 50 and a laptop computer 52 by an air interface. In a fourth apartment 38 of the building 30, an optical transmission line 12 establishes a data link between the corresponding data and/or telecommunication socket 46 and a computer tower 52.

In case a house is connected to a optical fiber network, the challenge is to distribute the available broadband signal within the building. Typical scenarios arc
- new homes or very old electrical installations
- existent homes.
While for new home or very old installations, you may consider a new cabling in a green field mode the impact on existent homes with decent standard might be significant dependent on the technical solution used to provide in-building distribution of the signal.

Other variations to be disclosed embodiments can be understood and effected by those skilled in the art in practicing the claimed invention from a study of the drawings, the disclosure, and the appended claims. In the claims, the word "comprising" does not exclude other elements or steps, and the indefinite article "a" or "an" docs not exclude a plurality. The mere fact that certain measures are recited in mutually different dependent claims does not indicate that a combination of these measures cannot be used to advantage. Any reference signs in the claims should not be construed as limiting scope.

## Claims

1. A laying set (10) for laying an optical transmission line (12), the set (10) comprising:
- at least one optical fiber (14) for optically transmitting digital data; and
- a flexible carrier device (16);
wherein a first side region (18) of the optical fiber (14) is affixed to a first side (20) of the carrier device (16) and wherein a second side region (22) of the optical fiber (14) opposite to the first side region (18) and/or a second side (26) of the carrier device (16) opposite to the first side (20) comprises an adhesive (24) for fixing the optical transmission line (12) to at least one substrate medium when the optical transmission line (12) is laid.

2. The laying set according to claim 1, wherein the first side region (18) of the optical fiber (14) is affixed detachably to a first side (20) of the carrier device (16).

3. The laying set according to claim 1 or 2. wherein the fixation of the optical fiber (14) to the first side (20) of the carrier device (16) is performed by an adhesion.

4. The laying set according to any one of claims 1 to 3, wherein the optical fiber (14) is partial embedded in the carrier device (16).

5. The laying set according to any one of claims 1 to 4, wherein the carrier device (16) or at least one of the sides (20, 26) of the carrier device (16) is arranged or prepared for optically adapting the optical transmission line (12) to the substrate medium.

6. The laying set according to any one of claims 1 to 5, wherein the carrier device (16) is a transparent carrier device.

7. The laying set according to any one of the preceding claims, wherein the surface at the first side (20) and/or second side (26) of the carrier device (16) is paintable.

8. The laying set according to any one of the preceding claims, wherein the laying set (10) is configured as piece goods.

9. The laying set according to claims 1 to 7. wherein the laying set (10) is configured as a laying set with a pre-assembled or assembled optical transmission line element.

10. The laying set according to any one of the preceding claims, wherein the laying (10) set comprises only one optical fiber (14) per carrier device (16).

11. The laying set according to any one of the preceding claims, wherein the adhesive (24) at least partial extends over the first side (20) of the carrier device (16).

12. Use of a laying set (10) according to any one of the preceding claims for connecting customer premises equipment and/or at least one router device with a data and/or telecommunication socket of a building or part of a building.

13. Network system (28) comprising:
- a data and/or telecommunication socket (40, 42, 44, 46, 48) of a building (30) or part of a building;
- customer premises equipment (50, 52) and/or at least one router device(54);
- at least one optical transmission line (12) laid by means of a laying set (10) according to any one of claims 1 to 11 connecting the customer premises equipment (50, 52) and/or the router device (54) with the data and/or telecommunication socket (40, 42, 44, 46, 48).

14. The network system according to claim 13, wherein the building (30) is a single-family house and/or the part of a building is an apartment (32, 34, 36, 38) of an apartment block and/or an office environment.
